# DEMANDE DE BREVET EUROPEEN

(11) **EP 4 607 779 A1**
(43) Date de publication de la demande: **27.08.2025**
(21) Numéro de dépôt: 25157998.3
(22) Date de dépôt: 14.02.2025
(51) Int. Cl.: H02M 1/00, H02M 3/158, H02M 3/156, H02M 1/32, H02M 1/38

(54) **CONTROLE ANALOGIQUE NON-LINEAIRE DE CIRCUIT ELECTRIQUE MULTI-PHASES**

(30) Priorité: 21.02.2024 FR 2401676
(71) Demandeur: 3D Plus, 78530 Buc Cedex (FR)
(72) Inventeur: HARMAND, Thomas, 91120 PALAISEAU (FR)
(74) Mandataire: Atout PI Laplace

(57) **Abrégé**

L'invention a pour objet un circuit électrique multi-phases, pour alimenter une charge cible, comprenant :
- une cellule de puissance comprenant N branches d'alimentation qui convergent vers le noeud de sortie.
- un circuit de commande comprenant ;
∘ un circuit de régulation en tension configuré pour générer un signal de régulation binaire alternatif à partir d'une combinaison de la tension de sortie avec une tension de bruit.
∘ un circuit de répartition configuré pour générer pour chaque branche d'alimentation, au moins un signal d'activation dédié à partir du signal de régulation ;

la pluralité de signaux d'activation étant déphasés entre eux selon un déphasage variable au cours du temps.

## Description

### Champ d'application

La présente invention concerne les circuits électriques multi-phases pour des applications spatiales. Plus particulièrement, l'invention concerne la réalisation d'un contrôle non-linéaire et analogique de circuits multi-phases.

### Problème soulevé

Les convertisseurs multi-phases sont intégrés aux systèmes d'alimentation électrique pour améliorer l'efficacité énergétique, optimiser la régulation de la tension et gérer la charge de manière plus équilibrée. Ils opèrent avec des signaux électriques répartis sur plusieurs phases, permettant une distribution équilibrée des charges. Ces convertisseurs sont polyvalents, pouvant convertir entre tension continue et tension alternative, et réguler la tension ou le courant pour répondre aux besoins spécifiques des dispositifs électriques.

Dans le contexte d'un convertisseur multi-phases, on entend par « phase » une branche d'alimentation individuelle du circuit électrique qui effectue la conversion de l'énergie électrique. Les convertisseurs multi-phases utilisent plusieurs de ces phases, généralement deux, trois, ou plus, qui fonctionnent de manière indépendante pour réaliser la conversion d'énergie. Chaque phase opère avec un décalage temporel par rapport aux autres, créant ainsi une séquence temporelle dans laquelle chaque phase contribue successivement à la sortie totale du convertisseur. Cette approche répartit la charge électrique et réduit les variations de courant, ce qui peut conduire à une meilleure efficacité et à une réduction des ondulations de courant. Par exemple, dans un convertisseur biphasé, deux phases opèrent en alternance pour réduire la tension. De même, un convertisseur triphasé impliquerait trois phases fonctionnant successivement.

Un convertisseur multi-phases comprend généralement une cellule de puissance formée par la pluralité de phases et un circuit de commande configure pour contrôler l'activation et la désactivation des différentes phases pour obtenir le décalage temporel d'opération des phases l'une par rapport aux autres.

Avec l'accroissement des besoins en puissance des unités de calcul, les modules régulateurs de tension (VRM) doivent fournir davantage de courant tout en améliorant leur réactivité face aux transistors de charge. Pour ce faire, l'utilisation de topologies multi-phases ou multi-phases à capacité série est privilégiée. L'association de ces topologies à un contrôle non linéaire permet d'optimiser les performances de ces convertisseurs. Cependant, il est complexe d'appliquer un contrôle non linéaire efficace sur des convertisseurs multi-phases ou multi-phases à capacité série, en particulier dans des applications qui n'incluent pas de contrôleur numérique tel qu'un microprocesseur, un FPGA ou un processeur.

Plus particulièrement, l'implémentation du circuit de commande par des contrôleurs numériques donne un circuit avec une robustesse technologique dégradée dans le contexte d'application spatiale. En effet, les circuits de contrôle numériques conventionnels présentent souvent des limitations en termes de fiabilité dans les environnements extrêmes de l'espace. Les solutions actuellement disponibles sont souvent basées sur des circuits de commandes numériques conventionnels qui ne sont pas optimisées pour les contraintes spécifiques de l'espace, notamment la résistance aux radiations, la fiabilité et la stabilité.

En outre, l'invention tente de résoudre le problème relatif aux changements de fréquences de fonctionnement des signaux de commandes des différentes phases déphasés. En effet, lorsque le circuit de commande n'est pas régi par une fréquence d'horloge fixe, il devient difficile de générer des signaux de commandes de phases déphasées avec une fréquence indéterminée. Dans ce cas, le circuit de commande doit déphaser les signaux de commande, à partir d'un seul signal d'entrée, sans connaitre préalablement le moment de déclenchement de la phase suivante. On parle dans ce cas de la conception d'un circuit de commande « non-linéaire ».

Pour la description de l'invention, nous allons utiliser la terminologie « branche d'alimentation » pour désigner les phases électriques d'un circuit multi-phases.

### Réponse au problème et apport solution

Pour pallier les limitations des solutions existantes, l'invention propose un circuit électrique multi-phases avec un circuit de commande des phases non linéaire et analogique. La non-linéarité du circuit de commande permet de déphaser une commande principale sur plusieurs phases sans connaitre sa période. De plus, l'architecture proposée selon l'invention permet d'améliorer la stabilité du fonctionnement du circuit multi-phases indépendamment de la charge de sortie qui est ajustable en fonction de l'application visée.

L'implémentation analogique du circuit de commande selon l'invention permet d'assurer la compatibilité du circuit multi-phase avec un environnement hostile et plus particulièrement avec un environnement spatial. Cela présente une fiabilité supérieure aux microcontrôleurs numériques sensibles aux contraintes environnementales pour une application spatiale.

### Résumé /Revendications

L'invention a pour objet un circuit électrique multi-phases configuré pour générer un courant de sortie ou une tension de sortie pour alimenter une charge cible. Ledit circuit électrique multi-phases comprenant :
- une cellule de puissance comprenant :
   o un nœud d'entrée pour fournir une tension d'entrée ;
   o une masse électrique ;
   o un nœud de sortie pour fournir ladite tension de sortie,
   o N branches d'alimentation qui convergent vers le nœud de sortie, N étant un entier naturel supérieur à 1, chaque branche d'alimentation, comprenant :
      ▪ un nœud central séparé du nœud d'entrée par au moins un premier interrupteur et de la masse électrique par au moins un second interrupteur ;
- un circuit de commande comprenant :
   o un circuit de régulation en tension configuré pour générer un signal de régulation binaire alternatif à partir de la combinaison de la tension de sortie avec une tension de bruit alternative ; ladite tension de bruit étant générée par le circuit de régulation en tension à partir
      ▪ du potentiel électrique du nœud central d'une branche d'alimentation choisie ;
      ▪ ou à partir de la tension d'entrée ;
   o un circuit de répartition configuré pour générer pour chaque branche d'alimentation, au moins un signal d'activation dédié à partir du signal de régulation ; la pluralité de signaux d'activation étant déphasés entre eux selon un déphasage variable au cours du temps.

Selon un aspect particulier de l'invention, le circuit de régulation en tension comprend un comparateur pour comparer un signal intermédiaire à une tension de référence prédéterminée. Ledit signal intermédiaire ayant une composante continue correspondant à la tension de sortie et une composante alternative correspondant à la tension de bruit.

Selon un aspect particulier de l'invention, le circuit de régulation en tension comprend un pont diviseur comprenant un couple de résistances séparées par un troisième interrupteur et configuré pour générer une fraction de la tension d'entrée lorsque le troisième interrupteur est passant ; le troisième interrupteur étant commandé par le signal de régulation .

Selon un aspect particulier de l'invention, le circuit de régulation en tension comprend N diodes tel que chaque diode ayant une anode connectée au nœud central d'une branche d'alimentation associée à ladite diode et tel que les cathodes des diodes étant connectée à un nœud commun séparé de la masse électrique par un quatrième interrupteur commandé par le signal de régulation.

Selon un aspect particulier de l'invention, le circuit de répartition comprend une chaine de N bascules de type D toutes synchronisées selon le signal de régulation et montées tel que : la sortie d'une bascule de rang i=1 à N-1 est connectée à l'entrée de la bascule suivante de rang i+1.

Selon un aspect particulier de l'invention, le circuit de répartition comprend en outre une cellule logique de type OR ayant une première entrée connectée à la sortie de la bascule de rang N , une seconde entrée recevant un signal d'initialisation et une sortie connectée à l'entrée de la bascule de rang i=1.

Selon un aspect particulier de l'invention, le circuit de répartition comprend en outre N cellules logiques de type ET ; chaque cellule de type ET ayant une première entrée recevant la sortie d'une bascule D associée et une seconde entrée recevant le signal de régulation et une sortie pour fournir le signal d'activation vers une branche d'alimentation associée.

Selon un aspect particulier de l'invention, le circuit de commande comprend en outre un circuit de protection inséré entre le circuit de régulation en tension et le circuit de répartition et configuré pour limiter la durée de la mise en haut ou en bas du signal de régulation à un seuil prédéterminé.

Selon un aspect particulier de l'invention, le circuit de commande comprend en outre un circuit de temps morts inséré entre le circuit de répartition et la cellule de puissance et configuré générer pour chaque branche d'alimentation , un premier et un second signal d'activation complémentaires, chaque front de transition du second signal d'activation étant temporellement décalé par rapport au premier signal d'activation.

Selon un aspect particulier de l'invention, chaque branche d'alimentation comprend une inductance élémentaire associée montée entre le nœud central et le nœud de sortie ; chaque branche d'alimentation étant configurée pour générer un courant élémentaire à travers l'inductance élémentaire associée.

### Description Détaillée des Figures

D'autres caractéristiques et avantages de la présente invention apparaîtront mieux à la lecture de la description qui suit en relation aux dessins annexés suivants.
la figure 1 illustre un circuit électrique multi-phases selon un premier mode de réalisation de l'invention.
la figure 2a illustre un premier exemple d'une cellule de puissance du circuit électrique multi-phases selon l'invention.
la figure 2b illustre un second exemple d'une cellule de puissance du circuit électrique multi-phases selon l'invention.
la figure 3a illustre un premier exemple d'un circuit de régulation en tension du circuit électrique multi-phases selon l'invention.
la figure 3b illustre un second exemple d'un circuit de régulation en tension du circuit électrique multi-phases selon l'invention.
la figure 4 illustre le circuit de répartition du signal de commande du circuit électrique multi-phases selon l'invention.
la figure 5 illustre un chronogramme des signaux internes et externes du circuit de commande du circuit électrique multi-phases selon l'invention.
la figure 6 illustre un circuit électrique multi-phases selon un second mode de réalisation de l'invention.
la figure 7a illustre un exemple d'implémentation du circuit de protection dans le circuit électrique multi-phases selon un second mode de réalisation de l'invention.
la figure 7b illustre un circuit de génération du signal RESET dans le circuit électrique multi-phases selon le second mode de réalisation de l'invention.
la figure 7c illustre un circuit de génération du signal SET dans le circuit électrique multi-phases selon le second mode de réalisation de l'invention.

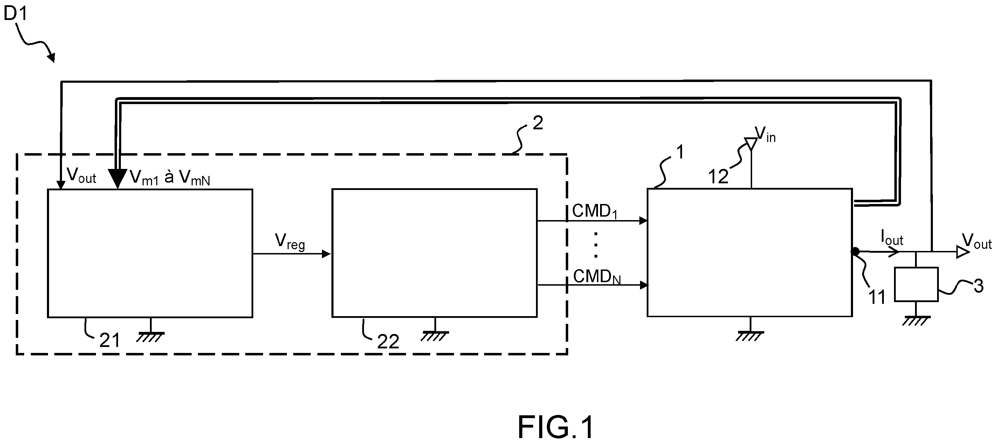

La figure 1 illustre un circuit électrique multi-phases D1 selon un premier mode de réalisation de l'invention. Le circuit électrique multi-phases D1 comprend une cellule de puissance 1 et un circuit de commande 2. Le circuit de puissance 1 est formé par N branches d'alimentation d'indices i=1 à N configurés pour générer un courant de sortie Iₒᵤₜ vers une charge 3 à alimenter. Le circuit de commande 2 est configuré pour générer des signaux d'activation CMDᵢ, avec i=1 à N, déphasés entre eux selon un déphasage variable au cours du temps. Chaque signal d'activation CMDᵢ est dédié à la branche d'alimentation de même indice i pour déclencher ladite branche d'alimentation pour alimenter la charge 3 pendant une durée. La branche d'alimentation activée est alors en un état de conduction.

La cellule de puissance 1 comprend un nœud d'entrée 12 pour fournir une tension d'entrée Vᵢₙ ; une masse électrique GND ; un nœud de sortie 11 pour fournir ladite tension de sortie Vₒᵤₜ et les N branches d'alimentation qui convergent vers le nœud de sortie 11. La charge à alimenter 3 est montée entre le nœud de sortie 11 et la masse GND. La cellule de puissance 1 génère :
- le courant de sortie Iₒᵤₜ à travers la charge à alimenter 3 ;
- la tension de sortie Vₒᵤₜ aux bornes de la charge 3 et propagée via une première boucle de rétroaction vers le circuit de commande 2
- au moins une tension de bruit Vₘ₁ à V_{mN} réinjectée(s) via une seconde boucle de rétroaction vers le circuit de commande 2.

Le circuit de commande 2 comprend un circuit de régulation en tension 21 et un circuit de répartition 22. Le circuit de régulation en tension 21 est configuré pour générer un signal de régulation V_{reg} à partir de la combinaison de la composante continue de la tension de sortie Vₒᵤₜ rétropropagée avec la composante alternative de la tension de bruit choisie parmi au moins une tension de bruit Vₘ₁ à V_{mN} réinjectée(s) via la seconde boucle de rétroaction. Le signal de régulation V_{reg} est un signal numérique binaire et périodique destiné vers le circuit de répartition 22.

Le circuit de répartition 22 est configuré pour générer, pour chaque branche d'alimentation, un signal d'activation dédié CMD₁, CMD₂, CMD₃ à partir du signal de régulation V_{reg}. Les signaux d'activation sont déphasés entre eux selon un déphasage variable au cours du temps. Le signal de régulation V_{reg} présente un signal source à partir duquel seront générées les multiples signaux d'activation CMDᵢ avec un déphasage variable permettant d'activer les branches d'alimentation de la cellule de puissance 1 de manière séquentielle sans besoin d'un signal horloge de synchronisation.

La réinjection de la tension de sortie Vₒᵤₜ et de la tension de bruit Vₘᵢ dans le circuit de commande 2 permet d'obtenir un circuit électrique multi-phases D1 stable indépendamment de la fréquence d'activation des branches d'alimentation requise.

La tension de bruit Vₘᵢ est en phase avec la conduction de chacune des branches d'alimentation de manière à obtenir un fonctionnement indépendant de la charge et ajustable en fonction de l'application visé. De plus, cette génération de bruit permet la génération d'un signal de régulation V_{reg} qui reproduit la variation au cours du temps du courant traversant la branche d'alimentation associée.

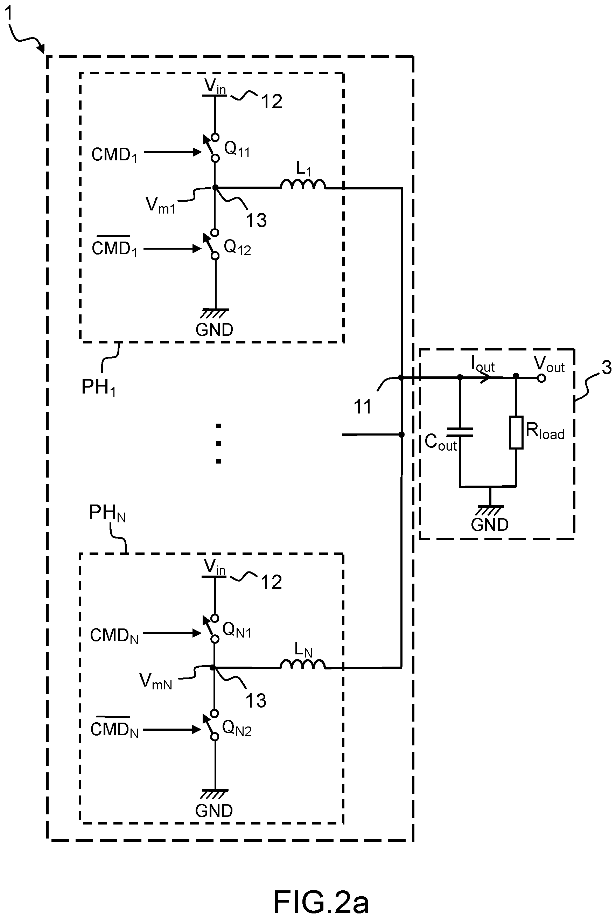

La figure 2a illustre un premier exemple d'une cellule de puissance 2 du circuit électrique multi-phases D1 selon l'invention. Dans cet exemple illustratif et non limitatif, la cellule de puissance 2 est un convertisseur Buck multi-phases permettant de convertir la tension d'entrée continue Vᵢₙ à une tension de sortie Vₒᵤₜ plus basse que la tension d'entrée. La tension de sortie Vₒᵤₜ est mesurée sur le nœud de sortie 11. La cellule de puissance 2 comprend une pluralité de branches d'alimentation PH₁ à PH_{N} qui converge vers le nœud de sortie 11. La charge cible 3 est constituée, par exemple, par une capacité de charge Cₒᵤₜ et une résistance de charge R_{load} montées en parallèle entre le nœud de sortie 11 et la masse électrique GND.

Chaque branche d'alimentation PHᵢ comprend un premier interrupteur Qᵢ₁, un second interrupteur Qᵢ₂, un nœud central 13, et une inductance élémentaire associée Lᵢ montée entre le nœud central 13 et le nœud de sortie 11. Pour chaque branche d'alimentation PHᵢ, le nœud central 13 est séparé du nœud d'entrée 12 par au moins le premier interrupteur associé Qᵢ₁. Pour chaque branche d'alimentation PHᵢ , le nœud central 13 est séparé de la masse GND par au moins le second interrupteur associé Qᵢ₂. Le premier interrupteur Qᵢ₁ est commandé par le signal d'activation CMD; associé à la branche d'alimentation PHᵢ. Le second interrupteur Qᵢ₂ est commandé par le complémentaire du signal d'activation CMD; associé à la branche d'alimentation PHᵢ. Par exemple, lorsque le signal d'activation CMDᵢ est à un état haut, le premier interrupteur Qᵢ₁ est à un état passant et le second interrupteur Qᵢ₂ est à un état bloquant. Cela induit un passage de courant à travers la branche d'alimentation PHᵢ à partir du nœud d'entrée 12 vers le nœud de sortie 11 à travers le nœud central associé 13 et l'inductance élémentaire associée Lᵢ. Inversement, lorsque le signal d'activation CMD; est à un état bas, le premier interrupteur Qᵢ₁ est à un état bloquant et le second interrupteur Qᵢ₂ est à un état passant. Cela induit la connexion du nœud central 13 à la masse GND et l'absence du courant dans la branche d'alimentation PHᵢ. Les différents signaux d'activation CMD; sont déphasés tels que chaque branche d'alimentation fonctionne avec un décalage temporel par rapport aux autres, ce qui contribue à répartir la charge et à réduire les fluctuations de courant. Cela permet une réduction des ondulations de courant et une diminution des pertes d'énergie. En répartissant la charge sur plusieurs branches d'alimentation PHᵢ, le convertisseur peut mieux gérer les variations de courant.

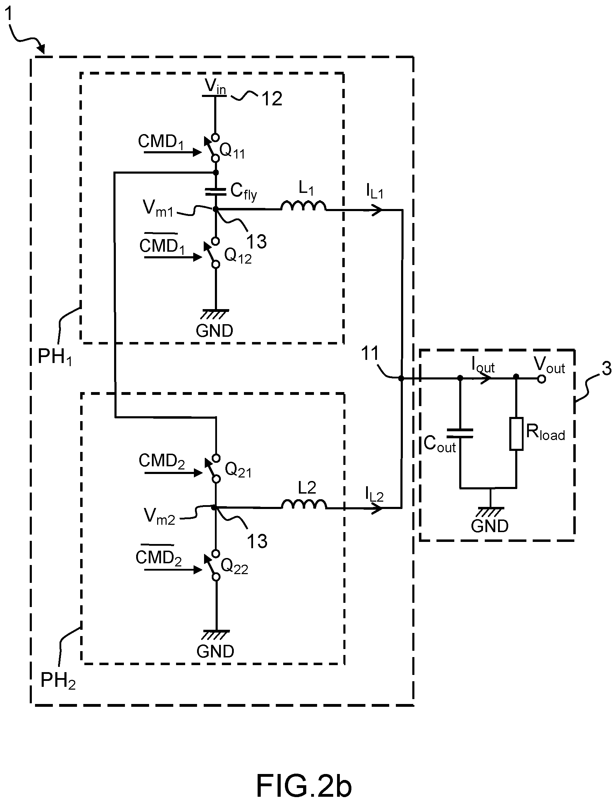

La figure 2b illustre un second exemple d'une cellule de puissance 2 du circuit électrique multi-phases D1 selon l'invention. Dans cet exemple illustratif et non limitatif, la cellule de puissance 2 est un convertisseur Buck multi-phases à capacité série permettant de convertir la tension d'entrée continue Vᵢₙ à une tension de sortie Vₒᵤₜ plus basse que la tension d'entrée. La cellule de puissance 2 selon le second exemple reprend l'ensemble des caractéristiques et des avantages détaillés pour le premier exemple. La cellule de puissance 2 selon le second exemple se distingue du premier exemple par le suivant : Chaque branche d'alimentation PHᵢ avec i=1 à N-1 comprend en outre une capacité intermédiaire C_{fly} montée en série entre le premier interrupteur Qᵢ₁ et le nœud central 13. De plus, pour chaque branche d'alimentation PHᵢ avec i=1 à N-1, le nœud commun entre capacité intermédiaire C_{fly} et le premier interrupteur Qᵢ₁ , est connecté au premier interrupteur Q₍ᵢ₊₁₎₁ de la branche d'alimentation suivante PHᵢ₊₁. La dernière branche d'alimentation de rang i=N est dépourvue de la capacité intermédiaire Cfly. Seule la branche d'alimentation initiale PH₁ est connectée au nœud d'entrée 12 à travers son premier interrupteur Q₁₁. La cellule de puissance 2 selon le second exemple présente une meilleure robustesse technique par rapport au premier exemple, car les premiers et seconds interrupteurs Qᵢ₁ et Oᵢ₂ voient à leurs bornes des tensions inférieures à la tension d'entrée Vᵢₙ.

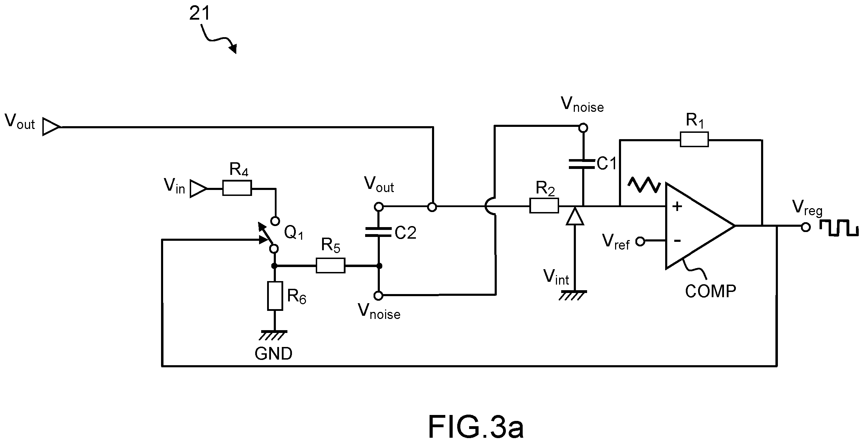

La figure 3a illustre un premier exemple du circuit de régulation en tension 21 du circuit de commande 2 selon l'invention. Le circuit de régulation en tension 21 est configuré pour générer un signal de régulation V_{reg} binaire alternatif à partir de la combinaison de la tension de sortie Vₒᵤₜ avec une tension de bruit Vₙₒᵢₛₑ.

Dans le premier exemple, le circuit de régulation en tension 21 comprend un pont résistif diviseur formé par un couple de résistances R4,R6 séparées par un interrupteur Q₁. Le pont résistif diviseur R4,R6 est configuré pour générer une fraction de la tension d'entrée Vᵢₙ lorsque l'interrupteur Q₁ est passant. Le troisième interrupteur Q₁ est commandé par le signal de régulation V_{reg} via une boucle de rétroaction interne au circuit de régulation en tension 21. Le pont diviseur R4,R6 contrôlé par le signal de régulation V_{reg} génère une tension de bruit Vₙₒᵢₛₑ synchronisée avec le signal de régulation V_{reg}. Le pont résistif diviseur est dimensionné de manière à obtenir une tension de bruit Vₙₒᵢₛₑ lorsque l'interrupteur Q₁ est passant égale à la tension mesurable au nœud central 13 de la branche d'alimentation PHᵢ activée. L'injection de la tension de bruit Vₙₒᵢₛₑ synchronisée permet d'assurer que les courants traversant les différentes branches d'alimentation sont égaux. Ainsi, la stabilité du convertisseur D1 est garantie sans nécessité de mesure de courant. D'autre part, le circuit de régulation en tension 21 reçoit la tension de sortie Vₒᵤₜ du nœud de sortie 11 propagée via la première boucle de rétroaction du circuit électrique multi-phases D1 décrite à la figure 1. La combinaison de la tension de bruit Vₙₒᵢₛₑ générée en interne avec la tension de sortie rétro propagée Vₒᵤₜ forment une tension intermédiaire Vᵢₙₜ. Le circuit de régulation en tension 21 comprend en outre un comparateur COMP configuré pour comparer un signal intermédiaire Vᵢₙₜ à une tension de référence prédéterminée V_{ref}. Le signal de sortie du comparateur COMP est le signal de régulation V_{reg} qui est un signal binaire périodique.

Le circuit de régulation en tension 21 comprend en outre une résistance R2 montée entre le nœud de sortie fournissant la tension de sortie Vₒᵤₜ et l'entrée non-inverseuse du comparateur COMP correspondant signal intermédiaire Vᵢₙₜ. La résistance R2 permet de superposer la composante continue de la tension de sortie Vₒᵤₜ à l'entrée non-inverseuse du comparateur COMP.

Le circuit de régulation en tension 21 comprend en outre une capacité C2 montée entre d'une part le nœud fournissant la tension de sortie Vₒᵤₜ et d'autre part le nœud fournissant la tension de bruit Vₙₒᵢₛₑ. La capacité C2 permet d'intégrer la tension de bruit Vₙₒᵢₛₑ à travers au moins la résistance R4 de manière à obtenir un signal triangulaire entre la tension de sortie Vₒᵤₜ et la tension de bruit Vₙₒᵢₛₑ.

Le circuit de régulation en tension 21 comprend en outre une capacité C1 montée entre d'une part le nœud de sortie fournissant la tension de sortie Vₒᵤₜ et d'autre part l'entrée non-inverseuse du comparateur COMP correspondant au signal intermédiaire Vᵢₙₜ. La capacité C1 agit comme un filtre passe-haut. La capacité C1 permet de superposer la composante alternative de la tension de bruit Vₙₒᵢₛₑ à l'entrée non-inverseuse du comparateur COMP. On obtient ainsi, un signal intermédiaire Vᵢₙₜ ayant une composante continue correspondant à la tension de sortie Vₒᵤₜ et une composante alternative correspondant à la tension de bruit Vₙₒᵢₛₑ. L'impédance de la capacité C1 est inférieure à l'impédance de la résistance R2 à la fréquence de fonctionnement. Cela permet d'éviter une chute de tension entre la tension de bruit Vₙₒᵢₛₑ le signal intermédiaire Vᵢₙₜ.

Le circuit de régulation en tension 21 génère en interne un signal intermédiaire Vᵢₙₜ triangulaire synchronisé avec le courant de la branche sur une entrée du comparateur COMP ayant deux seuils d'activation. Le signal intermédiaire Vᵢₙₜ reproduit l'allure du courant traversant l'inductance de la branche d'alimentation en conduction. On obtient ainsi, le signal de régulation V_{reg} binaire périodique selon une fréquence f_{reg} déterminée par la constante de temps R4.C2 et par les valeurs des deux seuils d'hystérésis du comparateur COMP.

Optionnellement, le circuit de régulation en tension 21 comprend en outre une résistance R5 montée entre d'autre part le nœud fournissant la tension de bruit Vₙₒᵢₛₑ et d'autre part la sortie du pont diviseur de tension R4,R6. Dans ce cas, la fréquence f_{reg} est déterminée par la constante de temps (R4+R5).C2 par les valeurs des deux seuils d'hystérésis du comparateur COMP. L'ajout de la résistance R5 permet d'obtenir un degré de liberté supplémentaire pour le dimensionnement de la fréquence f_{reg.}

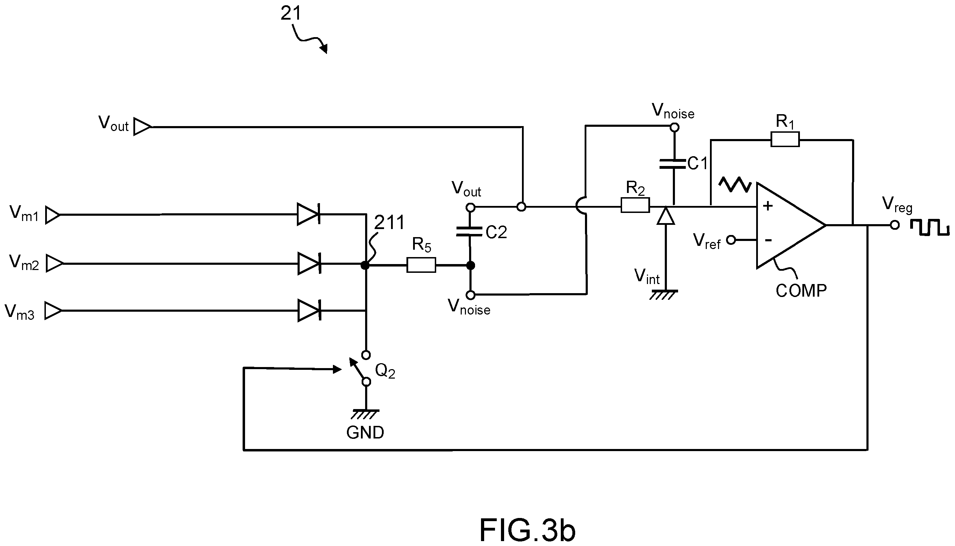

La figure 3b illustre un second exemple du circuit de régulation en tension 21 du circuit de commande 2 selon l'invention. Le circuit de régulation en tension 21 est configuré pour générer un signal de régulation V_{reg} binaire alternatif à partir de la combinaison de la tension de sortie Vₒᵤₜ avec une tension de bruit Vₙₒᵢₛₑ.

Dans le second exemple, le circuit de régulation en tension 21 comprend N diodes Dᵢ de rang i=1 à N avec N le nombre de branches d'alimentation PHᵢ. Dans cet exemple, on considère que N=3. Chaque diode Dᵢ de rang i présente une anode connectée au nœud central 13 de la branche d'alimentation PHᵢ associée à ladite diode Dᵢ. Les cathodes des diodes Dᵢ sont connectées à un nœud commun 211. Le nœud commun 211 est séparé de la masse électrique GND par un interrupteur Q₂. L'interrupteur Q₂ est commandé par le signal de régulation V_{reg} via une boucle de rétroaction interne au circuit de régulation en tension 21. Pour l'une quelconque des branches d'alimentation PHᵢ, lorsque le premier interrupteur Qᵢ₁ est passant, le nœud central 13 est à une tension centrale Vₘᵢ non nulle. La diode correspondante Dᵢ est soumise à une tension positive et devient ainsi passante. Les autres diodes Dⱼ (avec j≠i) sont à l'état bloquant. La tension centrale Vₘᵢ est ainsi propagée vers le nœud commun 211 afin de former la tension de bruit Vₙₒᵢₛₑ. Ce signal de bruit permet d'ajouter dans la boucle de régulation l'image du courant traversant l'inductance élémentaire Lᵢ de la branche d'alimentation PHᵢ activée. Cela permet d'assurer la répartition des courants dans les inductances Lᵢ si celles-ci sont identiques. L'activation de l'interrupteur Q₂ assure la remise à la masse du nœud commun 211 lorsque toutes branches d'alimentation sont désactivées.

D'autre part, le circuit de régulation en tension 21 reçoit la tension de sortie Vₒᵤₜ du nœud de sortie 11 propagée via la première boucle de rétroaction du circuit électrique multi-phases D1 décrite à la figure 1. La combinaison de la tension de bruit Vₙₒᵢₛₑ générée en interne avec la tension de sortie rétro propagée Vₒᵤₜ forment une tension intermédiaire Vᵢₙₜ. La tension de bruit Vₙₒᵢₛₑ est propagée vers un nœud commun avec la tension de sortie Vₒᵤₜ. Le signal intermédiaire Vᵢₙₜ présente ainsi une composante continue correspondant à la tension de sortie Vₒᵤₜ et une composante alternative correspondant à la tension de bruit Vₙₒᵢₛₑ.

Le circuit de régulation en tension 21 comprend en outre un comparateur COMP configuré pour comparer un signal intermédiaire Vᵢₙₜ à une tension de référence prédéterminée V_{ref}. Le signal de sortie du comparateur COMP est le signal de régulation V_{reg} qui est un signal binaire périodique.

De manière générale, le circuit de régulation en tension 21 génère un signal de régulation V_{reg} binaire périodique à partir d'une tension intermédiaire Vᵢₙₜ ayant une composante continue correspondant à la tension de sortie Vₒᵤₜ et une composante alternative correspondant à la tension de bruit Vₙₒᵢₛₑ. Cette combinaison permet d'assurer que les courants traversant les différentes branches d'alimentation sont égaux et ainsi améliorer la stabilité du convertisseur D1.

Alternativement selon un mode de réalisation particulier, les N diodes Dᵢ de rang i=1 à N sont remplacés par N interrupteurs commandés par des signaux externes. A titre d'exemple, les interrupteurs sont réalisés par des transistors. Dans ce cas, il est possible de s'affranchir de l'interrupteur Q₂.

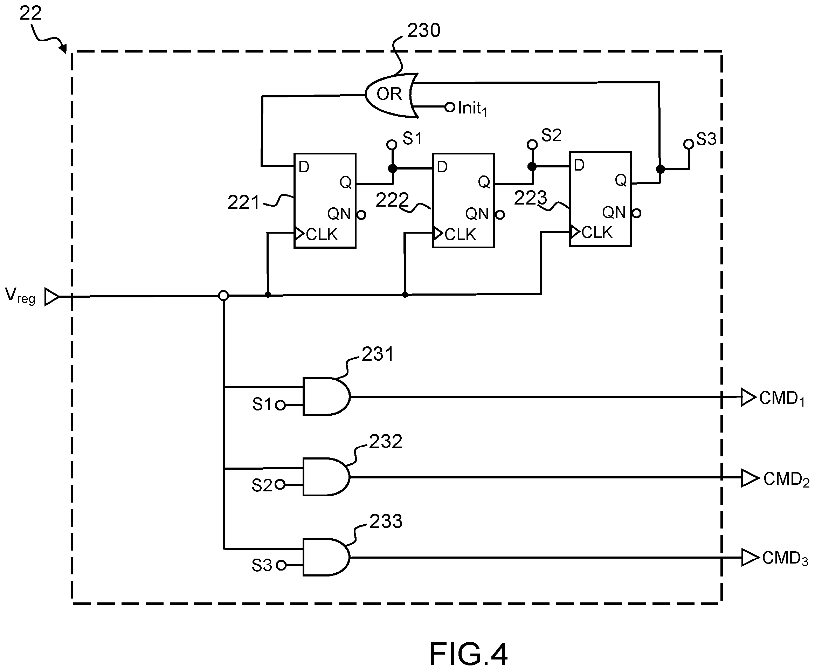

La figure 4 illustre le circuit de répartition 22 du circuit de commande 2 selon l'invention. Le circuit de répartition 22 reçoit le signal de régulation V_{reg} généré par le circuit de régulation en tension 21. Le circuit de répartition 22 est configuré pour générer pour chaque branche d'alimentation PHᵢ, un signal d'activation dédié CMDᵢ à partir du signal de régulation V_{reg}. Les signaux d'activation CMD; sont déphasés entre eux selon un déphasage sans nécessité d'un signal horloge externe avec une fréquence fixe. Le circuit de répartition 22 comprend une chaine de N bascules de type D, avec N le nombre de branches d'alimentation PHᵢ. A titre d'exemple non limitatif, on décrit un exemple avec trois branches d'alimentation et donc trois bascules de type D notées 221, 222,223. Les bascules 221,222, 223 sont toutes synchronisées par le signal de régulation V_{reg}. Les bascules 221,222, 223 sont montées tel que la sortie sᵢ d'une bascule de rang i=1 à N-1 est connectée à l'entrée de la bascule suivante de rang i+1. La chaine de N bascules forme un registre à décalage.

Le circuit de répartition 22 comprend une cellule logique 230 de type OU ayant une première entrée connectée à la sortie s₃ de la dernière bascule 223 ; une seconde entrée recevant un signal d'initialisation Init1; et une sortie connectée à l'entrée de la bascule de rang i=1. La cellule logique 230 permet d'initialiser la chaine de bascules en injectant un état logique haut sur l'entrée de la bascule initiale de rang i=1 lorsque le signal d'initialisation Init1 est à un état logique haut. Lors d'une étape d'initialisation qui précède la mise en opération du convertisseur, le signal d'initialisation Init1 est à un état haut état «1 » de manière à obtenir une valeur logique « 1 » sur l'entrée de la bascule 221 de rang i=1. Les entrées et sorties des autres bascules de la chaine sont à un état logique bas «0». Initialement, la sortie de la bascule 221 de rang i=1 est à l'état logique bas « 0 ». Le circuit de répartition 22 comprend en outre N cellules logiques de type ET. Dans l'exemple illustré, il s'agit des trois cellules ET notée 231, 232 et 233. Chaque cellule de type ET présente une première entrée recevant la sortie d'une bascule D associée. Chaque cellule de type ET présente une seconde entrée recevant le signal de régulation V_{reg}. Chaque cellule de type ET est destinée à fournir le signal d'activation CMDᵢ vers une branche d'alimentation associée PHᵢ. La première cellule ET 231 reçoit le signal de sortie s₁ provenant de la bascule 221 et génère le signal d'activation CMD₁ pour commander la branche d'alimentation PH₁ de rang i=1. La deuxième cellule ET 232 reçoit le signal de sortie s₂ provenant de la bascule 222 et génère le signal d'activation CMD₂ pour commander la branche d'alimentation PH₂ de rang i=2. La troisième cellule ET 233 reçoit le signal de sortie s₃ provenant de la bascule 223 et génère le signal d'activation CMD₃ pour commander la branche d'alimentation PH₃ de rang i=3.

De manière générale, une branche d'alimentation PHᵢ fournit du courant au circuit de charge lorsque le signal d'activation associé CMDᵢ est à un état logique haut «1». Le signal d'activation associé CMDᵢ est à un état logique haut «1» lorsque le signal de sortie sᵢ de la bascule associée et le signal de régulation V_{reg} sont simultanément à l'état logique haut «1».

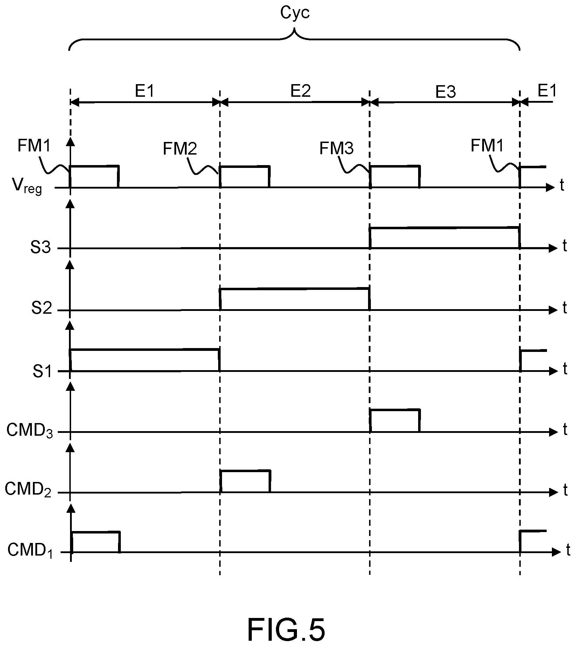

Nous allons dans ce qui suit décrire l'évolution temporelle des signaux de sortie s₁, s₂ et s₃ pendant un cycle de contrôle Cyc comprenant trois étapes successives E1, E2 et E3 comme illustré par les chronogrammes de la figure 5. La figure 5 décrit un chronogramme des signaux internes et externes du circuit de commande 3 de manière à illustrer le fonctionnement du circuit de répartition 22.

La première étape E1 est déclenchée par le front montant FM1 initial sur le signal de régulation V_{reg}. Ledit front montant provoque la transmission de l'état logique haut «1 » de l'entrée de la première bascule 221 vers sa sortie s₁. On obtient ainsi un état logique haut «1» uniquement sur la première sortie s₁. L'état logique haut «1» sur la première sortie s₁ est transmis aussi à l'entrée de la seconde bascule 222. L'état logique haut «1 » est maintenu sur la sortie s₁ tant qu'il n'y a pas eu de front montant suivant le front montant initial FM1. Les signaux de sortie s₂ et s₃ des autres bascules D de la chaine sont maintenus à un état logique bas «0». Ainsi, on obtient au début de l'étape E1 la configuration suivante : le signal de sortie s₁ de la bascule 221 et le signal de régulation V_{reg} sont simultanément à l'état logique haut «1», ce qui génère une pulsion à l'état haut sur le signal d'activation CMD₁ tout en maintenant les autres signaux d'activation CMD₂ et CMD₃ à un état logique bas. Seule la branche d'alimentation PH₁ de rang i=1 est conductrice et injecte un courant d'alimentation vers la charge cible 3.

La seconde étape E2 est déclenchée par le front montant FM2 sur le signal de régulation V_{reg}. Ledit front montant FM2 provoque la transmission de l'état logique haut «1» de l'entrée de la deuxième bascule 222 vers sa sortie S₂. On obtient ainsi un état logique haut «1» uniquement sur la deuxième sortie S₂. L'état logique haut « 1 » sur la deuxième sortie s₂ est transmis aussi à l'entrée de la troisième bascule 223. La cellule logique OU 230 reçoit sur ses deux entrées deux états logiques bas «0». La sortie s₁ de la bascule 221 passe à l'état logique bas «0». L'état logique haut « 1 » est maintenu sur la sortie s₂ tant qu'il n'y a pas eu de front montant suivant le front montant FM2. Les signaux de sortie s₁ et s₃ des autres bascules D de la chaine sont maintenus à un état logique bas « 0 ». Ainsi, on obtient au début de l'étape E2 la configuration suivante : le signal de sortie s₂ de la bascule 222 et le signal de régulation V_{reg} sont simultanément à l'état logique haut « 1 » , ce qui génère une pulsion à l'état haut sur le signal d'activation CMD₂ tout en maintenant les autres signaux d'activation CMD₁ et CMD₃ à un état logique bas. Seule la branche d'alimentation PH₂ de rang i=2 est conductrice et injecte un courant d'alimentation vers la charge cible 3.

La troisième étape E3 est déclenchée par le front montant FM3 sur le signal de régulation V_{reg}. Ledit front montant FM3 provoque la transmission de l'état logique haut « 1 » de l'entrée de la troisième bascule 223 vers sa sortie s₂₃. On obtient ainsi un état logique haut « 1 » uniquement sur la troisième sortie s₃. L'état logique haut « 1 » sur la troisième sortie s₃ est transmis aussi à l'entrée de la première bascule 221 via la cellule logique OU 230. L'état logique haut « 1 » est maintenu sur la sortie s₃ tant qu'il n'y a pas eu de front montant suivant le front montant FM3. De même, le front montant FM3 provoque la propagation de l'état logique bas «0» de l'entrée de la deuxième bascule 222 vers sa sortie s₂. De même, pour la sortie s₁ de la bascule 221. Les signaux de sortie s₁ et s₂ des autres bascules D de la chaine sont ainsi maintenus à un état logique bas « 0 ». Ainsi, on obtient au début de l'étape E3 la configuration suivante : le signal de sortie s₃ de la bascule 223 et le signal de régulation V_{reg} sont simultanément à l'état logique haut «1 », ce qui génère une pulsion à l'état haut sur le signal d'activation CMD₃ tout en maintenant les autres signaux d'activation CMD₁ et CMD₂ à un état logique bas. Seule la branche d'alimentation PH₃ de rang i=3 est conductrice et injecte un courant d'alimentation vers la charge cible 3.

Le circuit de répartition 22 permet alors de générer des signaux d'activation CMDᵢ déphasés sans connaitre au préalable une valeur prédéterminée du déphasage ciblé ou de la fréquence du signal de régulation V_{reg}. Le nombre de bascules et de cellules logiques ET est égal au nombre de branches d'alimentation PHᵢ. La fréquence du signal de régulation V_{reg} qui synchronise la chaine de bascules est divisée par le nombre de branches d'alimentation N. La fréquence de commutation *f_{CMD}* de chacune des branches d'alimentation PHᵢ du convertisseur D1 est régie par la relation suivante : *f_{CMD} = f_{reg}* / *N* ; avec *f_{reg}* la fréquence du signal de régulation V_{reg} et N le nombre de branches d'alimentation PHᵢ.

Le circuit de contrôle 2 comprend en outre des moyens pour générer des signaux complémentaires aux signaux d'activation CMDᵢ pour contrôler les seconds interrupteurs Qᵢ₂. Lesdits moyens couvrent par exemple des circuits inverseurs.

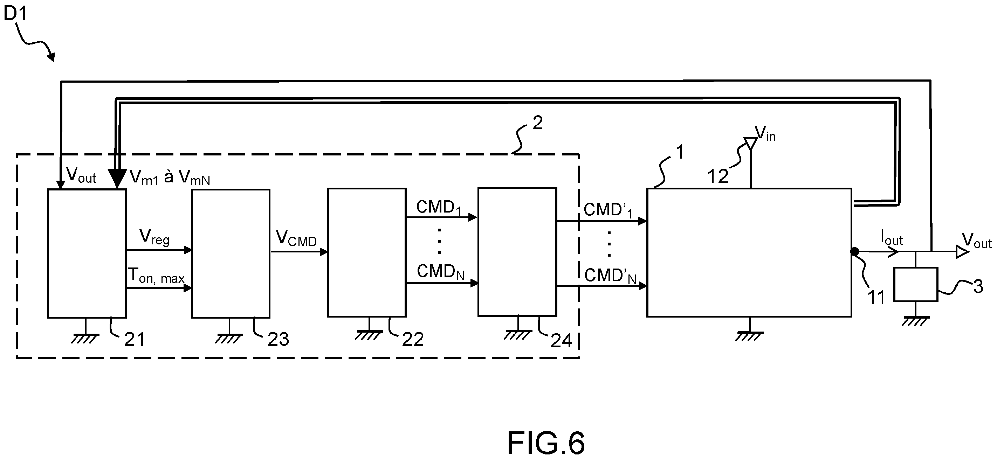

La figure 6 illustre un circuit électrique multi-phases D1 selon un second mode de réalisation de l'invention. Dans le deuxième mode de réalisation, le circuit de commande 2 comprend en outre un circuit de protection 23 inséré entre le circuit de régulation en tension 21 et le circuit de répartition 22. Le circuit de protection 23 reçoit le signal de régulation V_{reg} du circuit de régulation en tension 21 et génère un signal maître V_{CMD} vers le circuit de répartition 22. Le signal maître V_{CMD} joue le rôle de signal horloge pour les bascules D montées en chaine à la place du signal de régulation V_{reg} en comparaison au premier mode de réalisation. Le circuit de protection 23 est configuré pour limiter la durée de la mise en haut ou en bas du signal de régulation V_{reg} à un seuil prédéterminé T_{ON,max}. Le circuit de protection 23 permet de limiter le temps de conduction d'une branche d'alimentation PHᵢ. Le contrôle du temps de conduction maximal T_{ON,max} permet de provoquer un déséquilibre contrôlé et temporaire du courant traversant les branches d'alimentation du convertisseur lors d'un front transitoire du courant. Ce déséquilibre est généralement à éviter mais il s'est avéré qu'il permet d'améliorer le temps de réponse du convertisseur s'il est autorisé pendant une durée contrôlée.

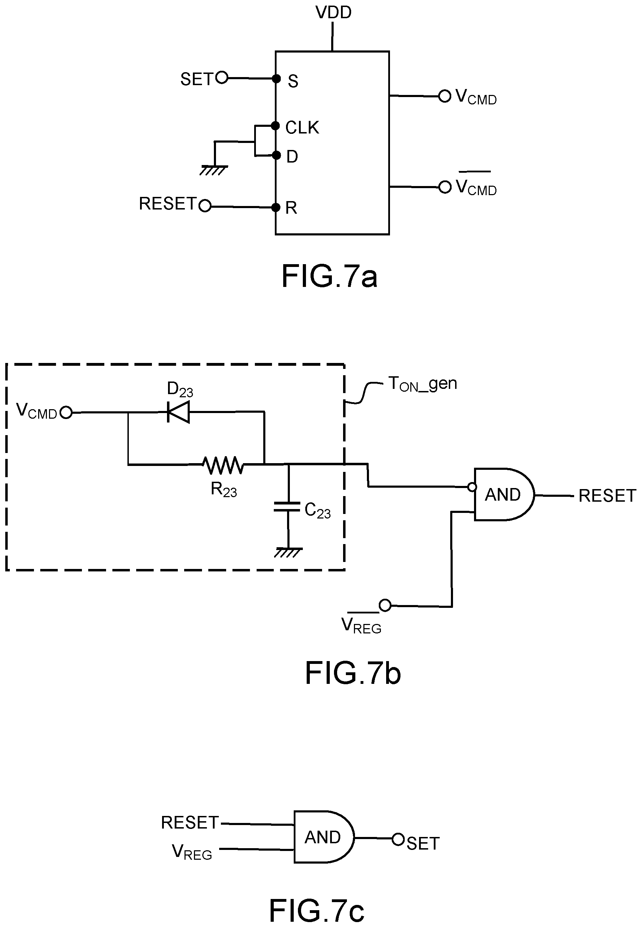

A titre d'exemple, pour implémenter le circuit de protection 23, il est possible d'utiliser une bascule D employée en mode SET / RESET comme illustré sur la figure 7a. Le signal SET met le signal maître V_{CMD} à un état haut, et le signal RESET, le ramène à un état bas. En cas de conflit, c'est le signal RESET qui prévaut. La figure 7b illustre le circuit de génération du signal RESET dans le circuit de protection 23. Le signal maître V_{CMD} est injecté à l'entrée d'un circuit T_{on_}gen permettant de régler le temps d'activation maximal à T_{ON,max}. Le circuit T_{on_}gen comprend un filtre RC formé par une résistance R₂₃ et une capacité C₂₃ aux bornes duquel la tension du signal maître V_{CMD} est appliquée. Le circuit T_{on_}gen comprend en outre une diode D₂₃ ayant son anode connectée au nœud commun entre la résistance R₂₃ et la capacité C₂₃. La cathode de la diode D₂₃ est connectée à l'autre pôle de la résistance R₂₃. Le signal de sortie du circuit T_{on_}gen est récupéré au niveau du nœud commun entre la résistance R₂₃ et la capacité C₂₃ et il est propagé à une première entrée d'une cellule logique ET. La seconde entrée de la cellule logique ET reçoit le complémentaire du signal de régulation V_{reg} (fourni par la sortie négative du comparateur COMP par exemple). Le signal RESET est généré par la cellule mémoire vers la bascule D du circuit de protection 23.

La figure 7c illustre le circuit de génération du signal SET dans le circuit de protection 23. Il s'agit d'une cellule AND recevant sur une première entrée le signal RESET déjà généré et sur l'autre entrée le signal de régulation V_{reg}.

De manière préférentielle, selon le deuxième mode de réalisation décrit sur la figure 6, le circuit de commande 2 comprend en outre un circuit de temps morts 24 inséré entre le circuit de répartition 22 et la cellule de puissance 1. Le circuit de temps morts 24 est configuré générer pour chaque branche d'alimentation, un premier CMDᵢ et un second signal d'activation CMD_{barre},ᵢ complémentaire. chaque front de transition du second signal d'activation CMD_{barre},ᵢ est temporellement décalé par rapport au premier signal d'activation. Cela permet d'éviter les problèmes de conduction croisée entre le premier interrupteur Qᵢ₁ et le second interrupteur Qᵢ₂ dans une branche d'alimentation PHᵢ.

L'implémentation du circuit de temps morts 24 est indépendante de l'implémentation du circuit de protection 23 dans le circuit de contrôle 2 selon l'invention. Selon un troisième mode de réalisation, le circuit de contrôle 2 comprend le circuit de régulation en tension 21, un circuit de protection 23 et le circuit de répartition 22 tels que décrit précédemment. Selon un quatrième mode de réalisation, le circuit de contrôle 2 comprend le circuit de régulation en tension 21, le circuit de répartition 22 et le circuit de temps morts 24 tels que décrits précédemment.

L'invention est compatible avec plusieurs types de circuit multi-phases, notamment les convertisseurs de puissance tels que DC/DC, AC/AC, AC/DC, DC/AC, ainsi que dans les alimentations à découpage (SMPS). Cette solution serait bénéfique pour tout convertisseur multi-phase, multi-niveau ou hybride utilisant une commande non-linéaire. De plus, les onduleurs pour la conversion du courant continu en courant alternatif (CC-CA) dans les systèmes d'énergie solaire, éolienne et de stockage d'énergie pourraient également tirer profit de la génération de commandes selon l'invention.

## Revendications

1. Circuit électrique multi-phases (D1) configuré pour générer un courant de sortie (Iₒᵤₜ) ou une tension de sortie (Vₒᵤₜ) pour alimenter une charge cible (3) ; ledit circuit électrique multi-phases (D1) comprenant :
- une cellule de puissance (1) comprenant :
∘ un nœud d'entrée (12) pour fournir une tension d'entrée (Vᵢₙ) ;
∘ une masse électrique (GND) ;
∘ un nœud de sortie (11) pour fournir ladite tension de sortie (Vₒᵤₜ),
o N branches d'alimentation (PH₁, PH_{N}) qui convergent vers le nœud de sortie (11), N étant un entier naturel supérieur à 1, chaque branche d'alimentation (PH₁, PH_{N}), comprenant :
▪ un nœud central (13) séparé du nœud d'entrée (12) par au moins un premier interrupteur (Q₁₁, Q_{N1}) et de la masse électrique (GND) par au moins un second interrupteur (Q₁₂, Q_{N2}) ;
- un circuit de commande (2) comprenant :
o un circuit de régulation en tension (21) configuré pour générer un signal de régulation (V_{reg}) binaire alternatif à partir de la combinaison de la tension de sortie (Vₒᵤₜ) avec une tension de bruit (Vₙₒᵢₛₑ) alternative ; ladite tension de bruit (Vₙₒᵢₛₑ) étant générée par le circuit de régulation en tension (21) à partir
▪ du potentiel électrique du nœud central (13) d'une branche d'alimentation (PH₁, PH_{N}) choisie ;
▪ ou à partir de la tension d'entrée (Vᵢₙ);
o un circuit de répartition (22) configuré pour générer pour chaque branche d'alimentation , au moins un signal d'activation dédié (CMD₁, CMD₂, CMD₃) à partir du signal de régulation (V_{reg}); la pluralité de signaux d'activation étant déphasés entre eux selon un déphasage variable au cours du temps.

2. Circuit électrique multi-phases (D1) selon la revendication 1 dans lequel le circuit de régulation en tension (21) comprend un comparateur (COMP) pour comparer un signal intermédiaire (Vᵢₙₜ) à une tension de référence prédéterminée ; ledit signal intermédiaire (Vᵢₙₜ) ayant une composante continue correspondant à la tension de sortie (Vₒₙₜ) et une composante alternative correspondant à la tension de bruit (Vₙₒᵢₛₑ).

3. Circuit électrique multi-phases (D1) selon l'une quelconque des revendications 1 ou 2 dans lequel le circuit de régulation en tension (21) comprend un pont diviseur comprenant un couple de résistances (R4,R6) séparées par un troisième interrupteur (Q₁) et configuré pour générer une fraction de la tension d'entrée (Vᵢₙ) lorsque le troisième interrupteur est passant ; le troisième interrupteur (Q₁) étant commandé par le signal de régulation (V_{reg}).

4. Circuit électrique multi-phases (D1) selon l'une quelconque des revendications 1 ou 2 dans lequel le circuit de régulation en tension (21) comprend N diodes (D₁, D₂, D₃) tel que chaque diode (D₁, D₂, D₃) ayant une anode connectée au nœud central (13) d'une branche d'alimentation associée à ladite diode et tel que les cathodes des diodes étant connectée à un nœud commun (211) séparé de la masse électrique (GND) par un quatrième interrupteur (Q₂) commandé par le signal de régulation (V_{reg}).

5. Circuit électrique multi-phases (D1) selon l'une quelconque des revendications 1 à 4 dans lequel le circuit de répartition (22) comprend une chaine de N bascules de type D (221, 222,223) toutes synchronisées selon le signal de régulation (V_{reg}) et montées tel que : la sortie d'une bascule de rang i=1 à N-1 est connectée à l'entrée de la bascule suivante de rang i+1.

6. Circuit électrique multi-phases (D1) selon la revendication 5 dans lequel le circuit de répartition (22) comprend en outre une cellule logique de type OR ayant une première entrée connectée à la sortie de la bascule de rang N , une seconde entrée recevant un signal d'initialisation (Init1) et une sortie connectée à l'entrée de la bascule de rang i=1.

7. Circuit électrique multi-phases (D1) selon l'une quelconque des revendications 5 ou 6 dans lequel le circuit de répartition (22) comprend en outre N cellules logiques de type ET ; chaque cellule de type ET ayant une première entrée recevant la sortie d'une bascule D associée et une seconde entrée recevant le signal de régulation (V_{reg}) et une sortie pour fournir le signal d'activation (CMD₁, CMD₂, CMD₃) vers une branche d'alimentation associée.

8. Circuit électrique multi-phases (D1) selon l'une quelconque des revendications 1 à 7 dans lequel le circuit de commande (2) comprend en outre un circuit de protection (23) inséré entre le circuit de régulation en tension (21) et le circuit de répartition (22) et configuré pour limiter la durée de la mise en haut ou en bas du signal de régulation (V_{reg}) à un seuil prédéterminé.

9. Circuit électrique multi-phases (D1) selon l'une quelconque des revendications 1 à 8 dans lequel le circuit de commande (2) comprend en outre un circuit de temps morts (24) inséré entre le circuit de répartition (22) et la cellule de puissance (1) et configuré générer pour chaque branche d'alimentation , un premier (CMD₁, CMD₂, CMD₃) et un second signal d'activation (CMDN₁, CMDN₂, CMDN₃) complémentaires, chaque front de transition du second signal d'activation étant temporellement décalé par rapport au premier signal d'activation.

10. Circuit électrique multi-phases (D1) selon l'une quelconque des revendications 1 à 9 dans lequel chaque branche d'alimentation (PH₁, PH_{N}) comprend une inductance élémentaire associée (L₁, L_{N}) montée entre le nœud central (13) et le nœud de sortie (11) ; chaque branche d'alimentation (PH₁, PH_{N}) étant configurée pour générer un courant élémentaire (I₁, I_{N}) à travers l'inductance élémentaire associée.
